# EUROPEAN PATENT SPECIFICATION

(11) **EP 0 248 557 B1**
(45) Date of publication and mention of the grant of the patent: **17.02.1993**
(21) Application number: 87304319.4
(22) Date of filing: 15.05.1987
(51) Int. Cl.: G06F 12/02

(54) **Memory space clearing control method and device**
Vorrichtung und Verfahren zur Steuerung der Löschung eines Speicherbereichs
Dispositif et méthode pour la commande de l'effacement d'une zone mémoire

(30) Priority: 29.05.1986 GB 8613070
(43) Date of publication of application: 09.12.1987
(73) Proprietor: THE VICTORIA UNIVERSITY OF MANCHESTER, Manchester M13 9PL (GB); MATSUSHITA ELECTRIC INDUSTRIAL CO., LTD., Kadoma-shi, Osaka-fu, 571 (JP)
(72) Inventor: Gurd, John Richard, Manchester M20 9LP (GB); Kawakami, Katsura, Yokohamasi, Kanagawa-ken (JP)
(74) Representative: Allman, Peter John

(56) References cited:
- PROCEEDINGS OF THE 1978 INTERNATIONAL CONFERENCE ON PARALLEL PROCESSING, Bellaire, MI, 22nd-25th August 1978, pages 166-172, IEEE, New York, US; W.B. ACKERMAN: "A structure processing facility for data flow computers"
- COMMUNICATIONS OF THE ASSOCIATION OF COMPUTING MACHINERY, vol. 28, no. 1, January 1985, pages 34-52, ACM, New York, US; J.R. GURD et al.: "The Manchester prototype dataflow computer"

## Description

The present invention relates to a method and device for controlling the clearing of a memory space, and in particular to a method and device for clearing the contents of a memory of an electronic computer.

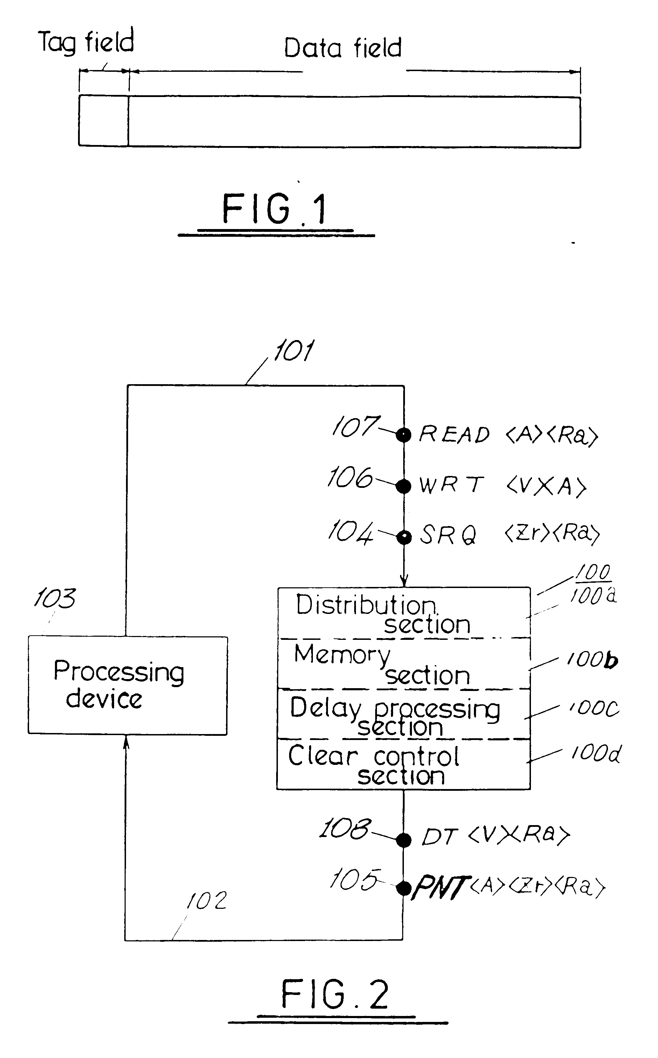

When it is desired to use a specific storage area or space in the memory of an electronic computer, it is necessary to first clear the memory device of all data and return the memory contents to an initial condition. For example, in the case of a memory device, a part of which is used to store error control codes such as a parity code associated with each stored word, before the parity code can be read the data must be temporarily entered in the memory. Referring to Figure 1, in a computer in which each word stored in the memory is provided with a tag field the content of which indicates characteristics of the stored data and influences processing of the data, and in a computer in which a tag field influences the destination of the stored data, it is necessary to clear the space to be used in the memory before using it. There are many other instances in which is it necessary to clear memory space.

Figure 2 illustrates the relationship between a processing device and a memory device in a computing device. The computing device comprises a memory device 100, including a distribution (allocation) section 100a, a memory section 100b, a delay (defer) processing section 100c, and a clear control section 100d. Channels 101 and 102 provide for the communication of data from a processing device 103 to the memory device 100, and from the memory device 100 to the processing device 103.

The communication of all data between the processing device 103 and the memory device 100 is achieved by sending data packets (these packets are hereinafter referred to as tokens). When the distribution section 100a of the memory device 100 receives a memory space request (SRQ) token 104, depending on the size of the space requested it sends a start address (A) in a token (PNT) 105. When the memory section 100b receives a write (WRT) token 106 or a read (READ) token 107 it responds to the write token by entering its parameter V into address A, and responds to the read token by reading the contents V of the address A and transmitting the read data to the processing device 103 as a data (DT) token 108. Except in the case of a write token, each token received by the memory device 100 results in the generation of a token for transmission to the processing device. The responses are identified by a parameter Ra.

The delay processing section 100c and the clear control section 100d do not engage directly in the sending or receiving of tokens. The delay processing section 100c handles read tokens which relate to data not yet stored in arrived at the memory section 100b, which tokens must therefore be delayed, and the clear control section 100d performs the function of returning the content of a memory space to its original condition when that memory space is no longer in use.

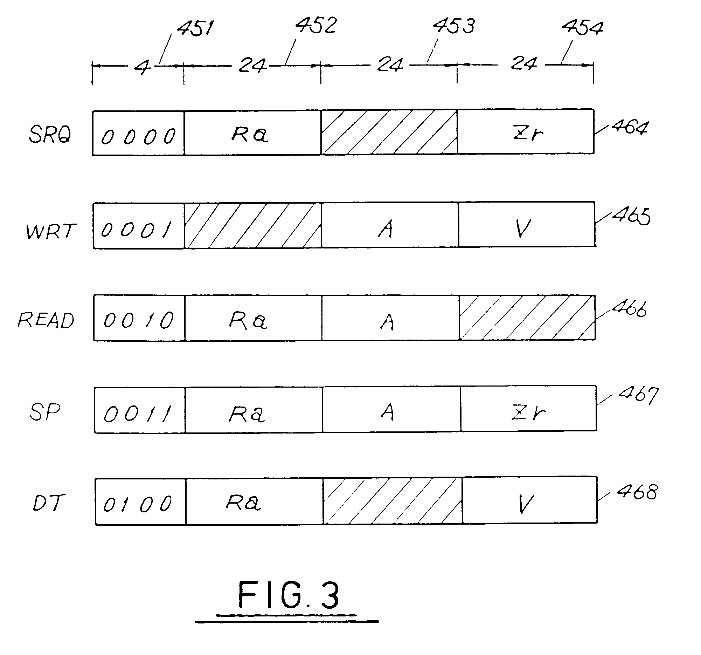

The different kinds of tokens are distinguished by a code forming part of each token. Figure 3 illustrates examples of the form of each token. Numerals 464 to 468 correspond to numerals 104, 106, 107, 105 and 108 respectively in Fig. 2. Referring to Fig. 3, each token comprises four fields, namely a first code field 451, a second field 452, a third field 453, and a fourth field 454. The first code filed 451 is used to distinguish between the different kinds of tokens, and in the example in Fig. 3 it is assigned 4 bits which enables the identification of sixteen different kinds of token. For the sake of convenience in the illustrated example each of fields 452 to 454 comprises in total twenty four bits but this number may be selected as appropriate to suit the system. The shaded areas in the diagrams represent fields which are not in use.

Figures 4a to 4e serve to explain a prior art method for clearing the contents of each address in a memory section. In the diagrams numerals 610 and 611 identify a clear control section and a memory section respectively. Channels 601 and 602 are provided for carrying tokens to and from a distribution section (not shown) corresponding to section 100a in Fig. 2. Channels 615 and 616 are provided for carrying tokens between the clear control section 610 and the memory section 611. The way in which in the prior art each address of a space 640 within the memory section 611 is cleared will now be explained. The start address of the memory space 640 is designated A, and the size of that memory space, namely the number of addresses included in the memory space, is designated Z.

Referring to Fig. 4a, when the memory space 640 is no longer in use, the clear control section 610 generates a clear token (CLR) 620 which it sends to the memory section 611. The token (CLR) 620 has three parameters, that is a space start address A, the size Z of the space, and the number of addresses C which have been cleared. When the token (CLR) 620 has just been formed, which is the case shown in Fig. 4a, the number of cleared addresses is zero, and therefore C=0.

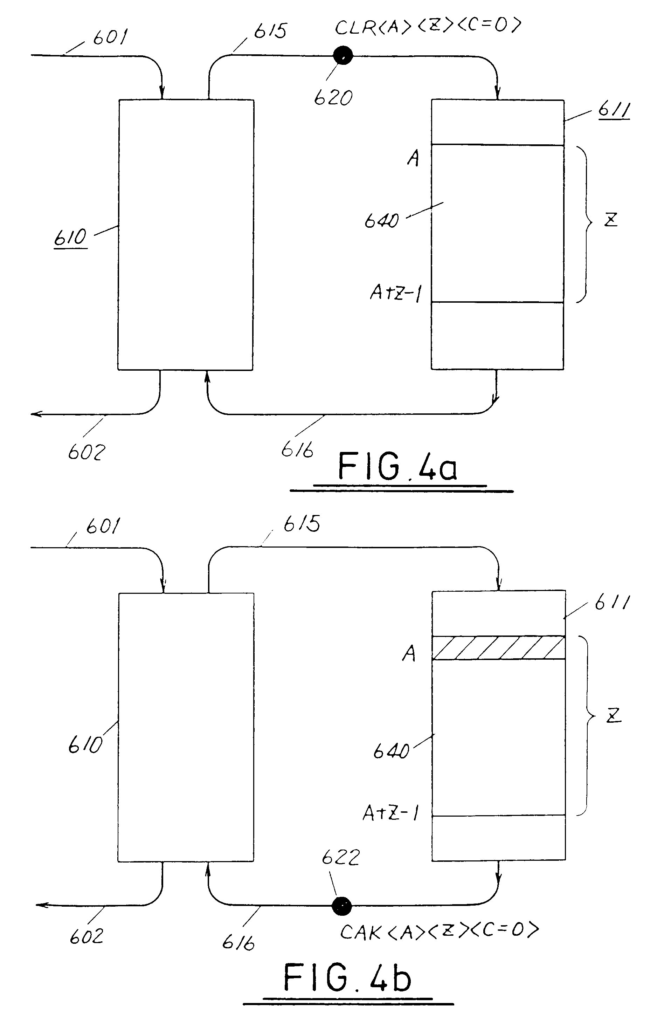

When the memory section 611 receives token (CLR) 620, it takes from the token the start address A and the cleared word number C and combines them to form the address to be cleared, that is A + C. In the case shown in Fig. 4a C = 0 and therefore the contents of the start address, namely the address A, are cleared. When this clearance has taken place, referring to Fig. 4b, the memory section 611 generates a clearance acknowledged token (CAK) 622. The parameters held by token (CAK) 622 are the same as in the case of token (CLR) 620.

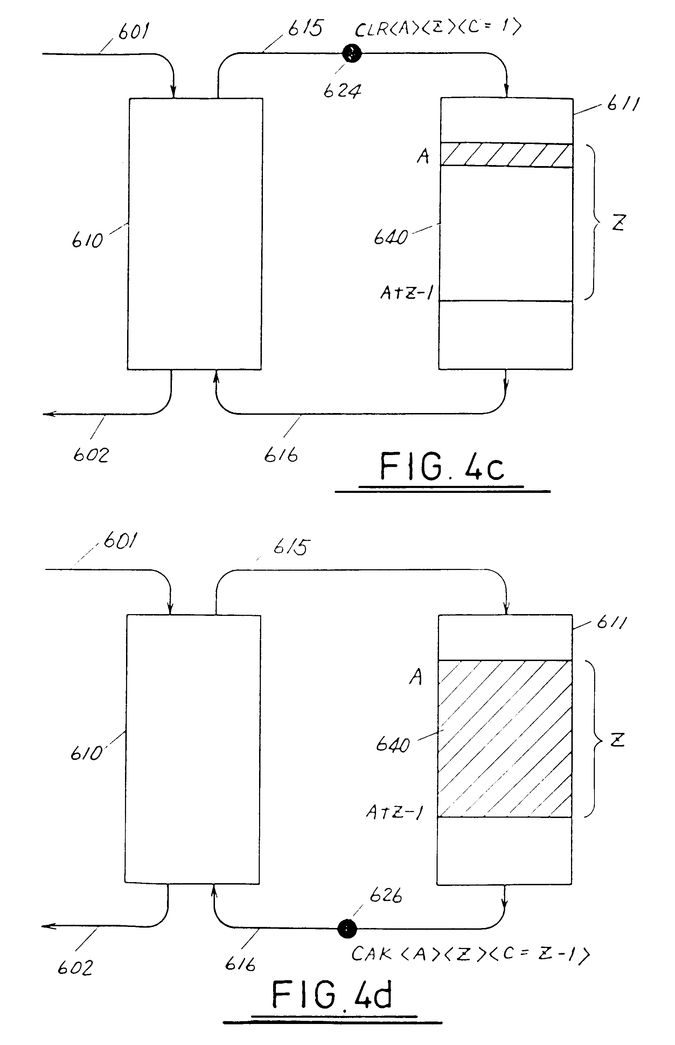

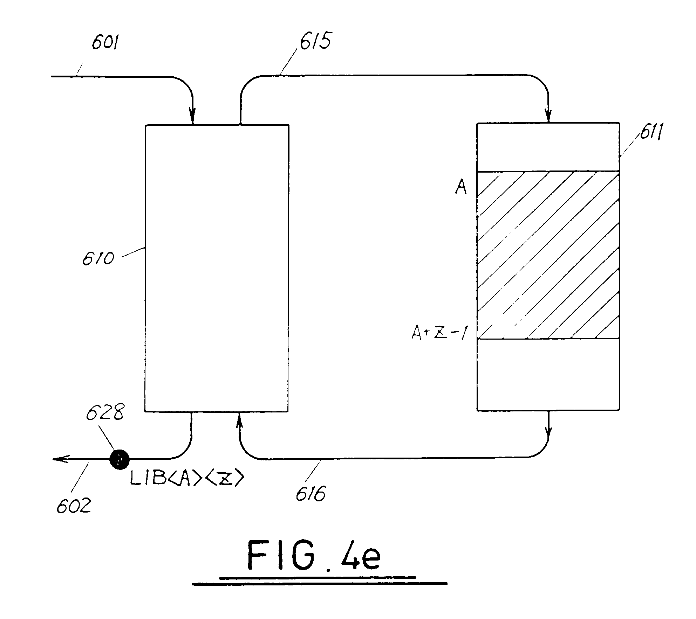

When the clear control section 610 receives the acknowledgement token (CAK) 622, it takes the parameters Z (the size of the space) and C (the number of cleared words). Depending on the values of the received parameters it performs one or other of the actions (a) and (b) described below.
(a) if C is less than (Z - 1) then referring to Fig. 4c, the clear control section 610 makes a new clear token 624. The number C of cleared words in token 624 is one greater than that of the previous clear token 622;
(b) If C equals (Z - 1), then referring to Fig. 4e, the clear control section 610 makes a space liberate token (LIB) 628. Referring to Fig. 4d, the fact that C = (Z - 1) means that an acknowledge token (CAK) 626 has been received by the clear control section, the token 626 indicating that (Z - 1) addresses have been cleared, which means that all the words in space 640 have been cleared. The purpose of the space liberate token (LIB) 628 is to communicate to the distribution section (corresponding to 100a in fig. 2) the fact that space 640 can be used again.

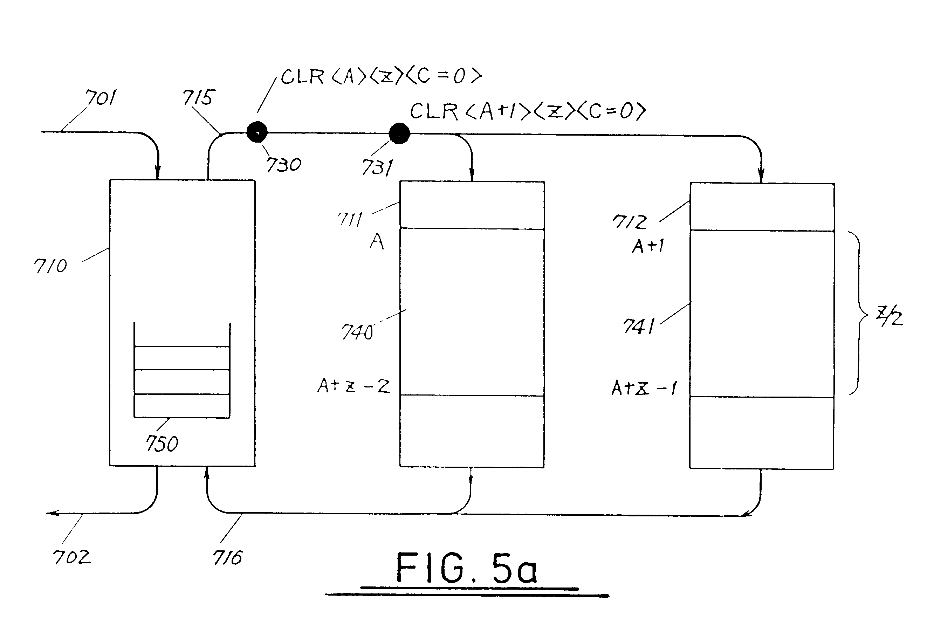

The above procedure enables a specific space in the memory section 611 to be cleared. A method has been proposed to speed up memory clearance and therefore speed up access to a memory space which is no longer in use. This known method relies upon dividing the memory section 611 into more than one unit by an interleaving process, as is explained below with reference to Figs. 5a to 5e.

Referring to Figs. 5a to 5e, to simplify the explanation of the known method, the memory is divided into only two units 711 and 712. The memory unit 711 contains even number addresses and unit 712 contains odd number addresses. Numerals 701 to 716 in Figs. 5a to 5e correspond to numerals 601 to 616 respectively in Figs. 4a to 4e. Referring to Fig 5a, a memory space of size Z and start address A is divided into a first space 740 which includes Z/2 even number addresses, and a space 741 which includes Z/2 odd number addresses. An explanation of the known method for clearing these spaces is given below.

As shown in Fig. 5a, the clear control section 710 generates two clear tokens 730 and 731. Token CLR 730 has as its parameters A, Z and C = 0 and token 731 has (A + 1), Z and C = 0.

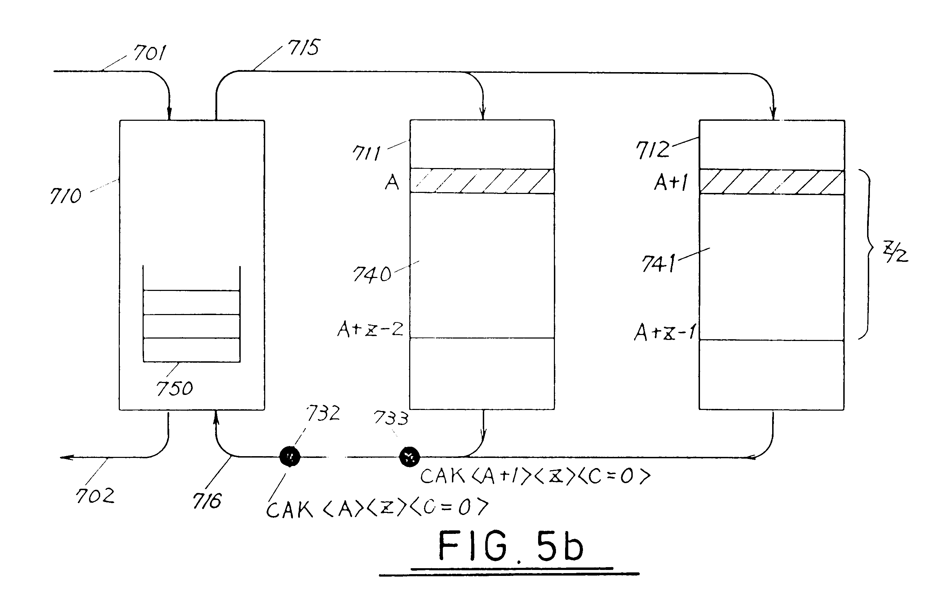

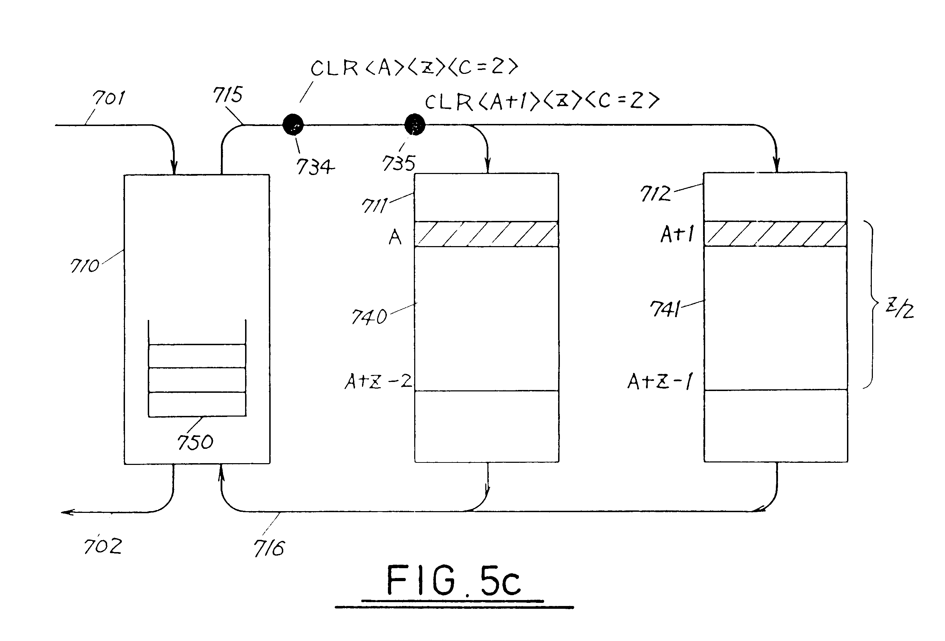

The memory unit 711 receives the token CLR 730, and the memory unit 712 receives token CLR 731. When each memory unit receives a claim token, it decides the address to be cleared from the received parameters and clears that address. The cleared address is the sum of the start address and the number of cleared words, i.e. A + C. Referring to Fig. 5b, C = 0, so that address A and (A + 1) are cleared. When this clearing process has been completed, the units 740 and 741 generate the tokens clearance acknowledge (CAK) 732 and 733 respectively which have the same parameters.

When the clear control section 710 receives tokens (CAK) 732 and 733, it reviews the space parameter Z, and parameter C representing the number of cleared words. Depending on the results of this, it carries out process (a) or process (b) as described below.
(a) In the case where C is less than Z, then referring to Fig. 5c, the clear control section 710 generates new CLR tokens 734 and 735. Of their parameters, the start address and the size of the space are the same as those of the acknowledge token (CAK), but the number of cleared words is two greater than that of the acknowledge token. In the example of Figs. 5b and c, CLR 734 and CLR 735 are made from CAK 732 and CAK 733 respectively.
(b) In the case where C = Z, then clear control section 710 reviews the start address parameter A, and the space size parameter Z of the acknowledge token CAK from the memory units 711 and 712, and it decides whether or not a token stack 750 contains a token CAK which has a start address which is only different by 1 from A (i.e. it is A+1 or A-1), and which has a size parameter which is the same.

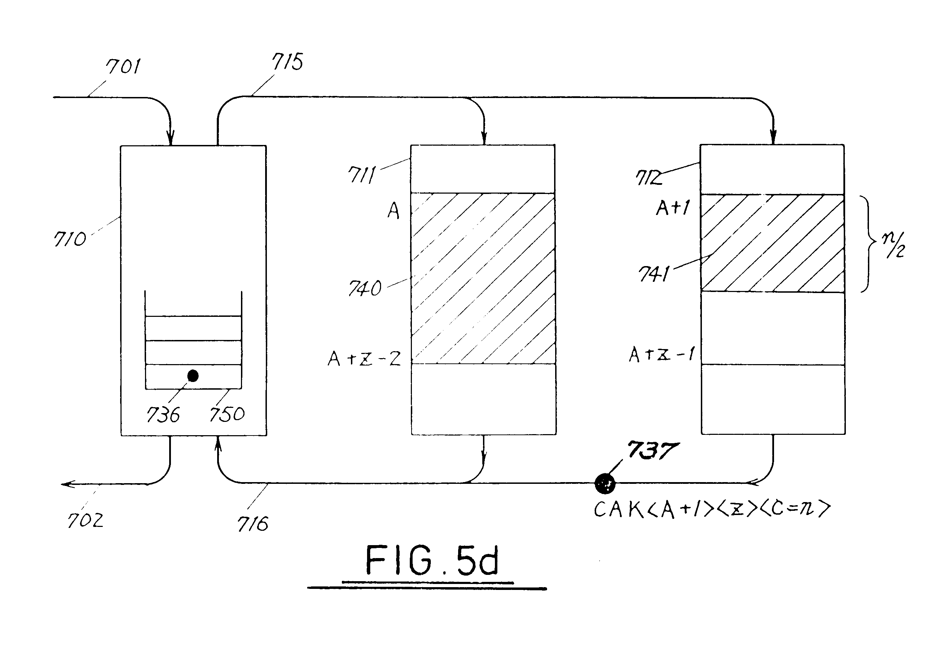

If such a CAK token is not in the token stack 750, the CAK token is stored in the token stack, as is information related to acknowledge token 736 (see Fig. 5d).

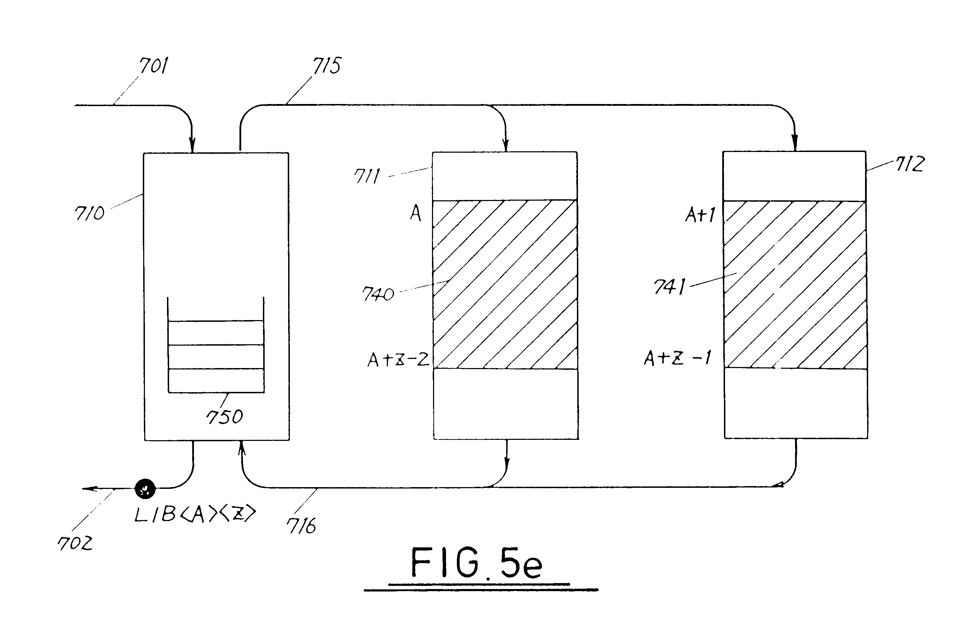

If such a CAK token is found in the token stack 750, that CAK token is taken from the token stack 750 and associated with the received CAK token 737, and as shown in Fig. 5e, a space liberate token (LIB) 738 is generated.

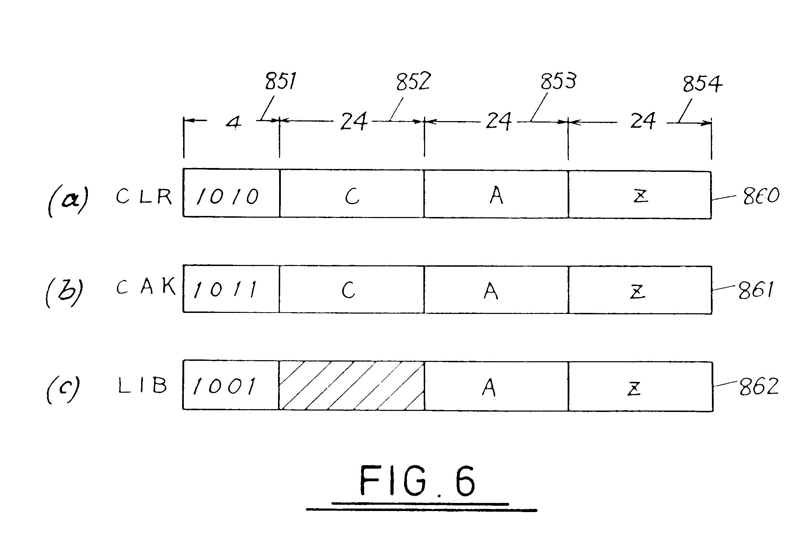

Fig. 6 illustrates examples of the form of tokens CLR, CAK and LIB which are used in the above process.

The above-described space clearance method does present problems. The memory is divided into two or more units by interleaving, and these units are processed in parallel, so that access is much quicker, but the known space clearing method exhibits the following disadvantages:-
(a) It is essential to have a token stack 750 in the clear control section 710, which makes the hardware of the clear control section 710 complicated;
(b) In increasing the number of units which are processed in parallel, the number of acknowledge tokens CAK which should be held in the token stack at any one time is increased, so that the capacity of the token stack must be large;
(c) When the relatively small space within one unit has been cleared, it is necessary to investigate whether or not a clear acknowledge token (CAK) has been received by the token stack 750 from the other units, and this process takes time.

It is an object of the present invention to provide a memory space clearing control method and device which obviate or mitigate the above mentioned problems and allow the clearing process to be carried out simply and quickly.

According to the present invention there is provided a memory space clearing control method for clearing a memory space in a memory device wherein the space to be cleared is divided into a series of subspaces each defined by a consecutive series of addresses, clear space tokens in respect of each subspace are sent to the memory device in parallel from a clear control device to clear individual addresses in the respective subspaces one at a time in address order and, when all the addresses in a subspace are cleared, a liberate space token is generated to indicate that the cleared subspace is free for use even if another subspace has not yet been cleared.

The invention also provides a memory space clearing control device comprising means for dividing a memory space to be cleared into a series of subspaces each defined by a consecutive series of addresses, means for generating clear space tokens in respect of each subspace in parallel so as to clear individual addresses in the respective subspaces one at a time in address order, means for detecting clearance of all the addresses in a subspace, and means responsive to the detecting means for generating a liberate space token to indicate that the cleared subspace is free for use even if another subspace has not yet been cleared.

The present invention will now be described, by way of example, with reference to the accompanying drawings. In the drawings:-
Fig. 1 is a schematic diagram of the form of data words used in prior art systems;
Fig. 2 is a block diagram of a clear control device of the prior art;
Fig. 3 is a schematic diagram of the form of tokens used in the prior art of Fig. 2;
Figs. 4a to 4e illustrate the operation of a clear control device of the prior art;
Figs. 5a to 5e illustrate a prior art method for clearing units of a memory in parallel;
Fig. 6 is a schematic diagram of the form of tokens used in the method described in Figs. 5a to 5e;
Fig. 7 is a block diagram of a memory space clear control device according to the present invention; and
Figs. 8a to 8e illustrate the method of the present invention as applied to the device according to the device of Fig. 7.

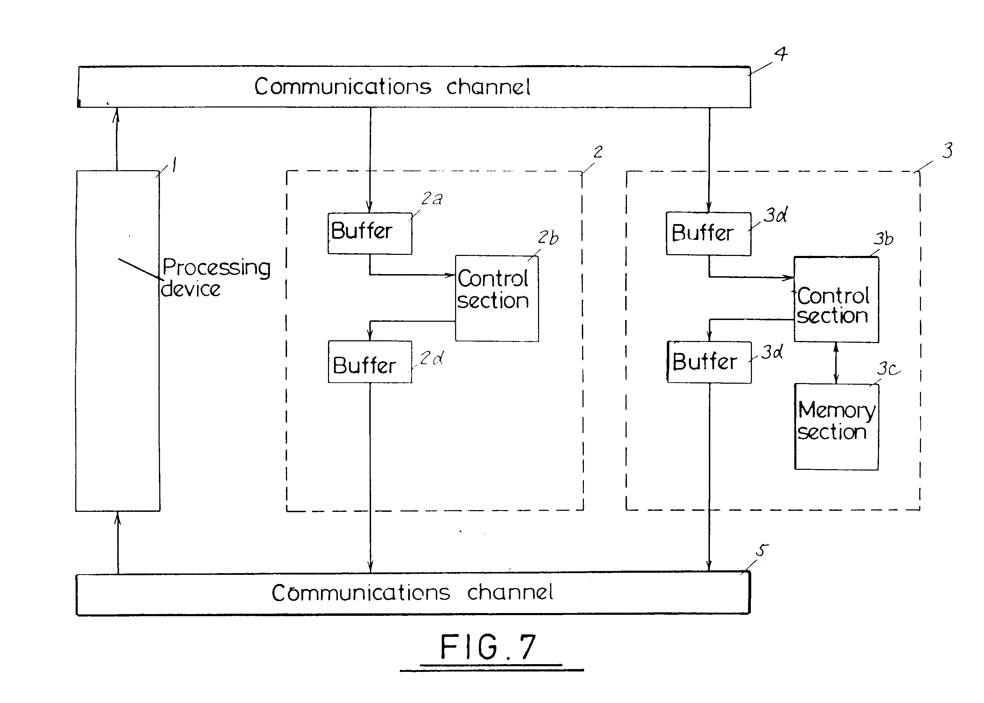

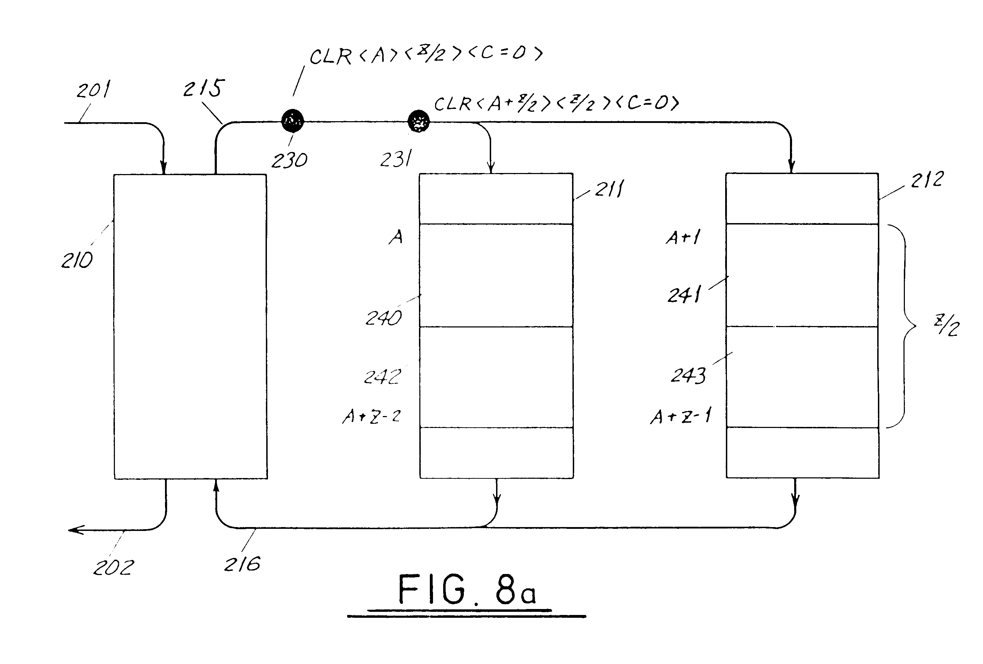

The present invention will now be described with reference to Fig. 7 and Figs. 8a to 8e of the accompanying drawings.

Fig. 7 is a block diagram representing a memory space clear control device in accordance with an embodiment of the present invention. In Fig. 7 numeral 1 identifies a processing device which corresponds to the processing device 103 in Fig. 2. A clear control section 2 and a memory section 3 correspond to the clear control section 100d and the memory section 100b in Fig. 2 respectively. Communications channels 4 and 5 transfer tokens between the processing device 1, the distribution section 2, and the memory section 3, and correspond to the lines 101 and 102 in Fig. 2. In the clear control section 2, a buffer 2a temporarily houses tokens which are received from the channel 4. A control section 2b distinguishes the type of token which is received and makes up an output token according to its type. A buffer 2d sends tokens from the control section 2b to the channel 5. In the memory section, a buffer 3a temporarily houses tokens which have been received from the channel 4. A control section 3b distinguishes tokens received according to their type, and depending on their type their parameters are stored in memory 3c or the contents of the memory 3c are read. A buffer 3d sends tokens from the control device 3b to the channel device 5.

The methods of the present invention for clearing memory space in parallel will now be explained with reference to Figs. 8a to 8e. Numeral 210 identifies a clear control section corresponding to section 2 of Fig. 7 and numerals 211 and 212 identify divisions of the memory 3c of Fig. 7. Numerals 201 to 216 identify components corresponding to components 701 to 716 of Figs. 5a to 5e. Just as in the case of the memory section in the example of Figs. 5a to 5e the memory section in Figs. 8a to 8e is divided into two units 211 and 212. The memory unit 211 includes even number addresses, and the memory unit 212 includes odd number addresses. The clearing process of a space with start address A and a space size Z will now be explained.

The clear control section 210 first creates clear tokens (CLR) 230 and 231. The parameters of these tokens are the advance address, the size of the space, and the number of cleared addresses. When the clear control section 210 creates these clear tokens, it divides the space to be cleared into a series of subspaces made up by consecutive addresses. Referring to Fig. 8a, in the described example the start address parameter is A for CLR 230 and (A+Z/2) for CLR 231. At the start the number of cleared addresses is 0.

When the memory units 211 and 212 receive the CLR tokens 230 and 231, they decide upon the addresses to be cleared on the basis of the received parameters. The addresses to be cleared are determined from the sum of the start address and the number of cleared words. Namely in the example of Fig. 2a, C = 0, so the address to be cleared for CLR 230 and CLR 231 are A and (A + Z/2) respectively.

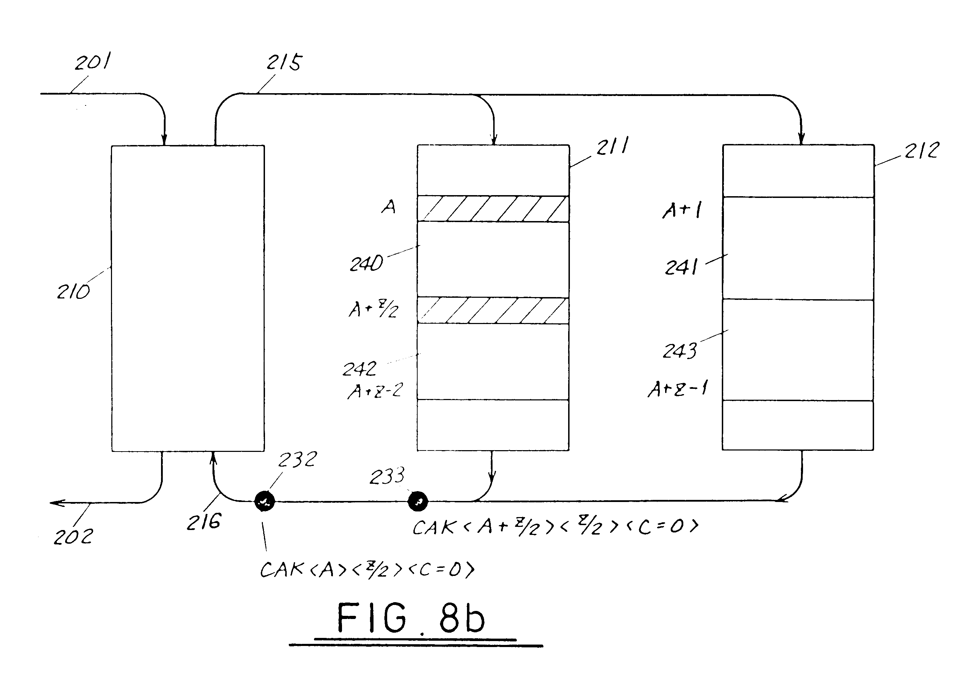

The memory units 211 and 212 clear the contents of the indicated addresses, and for each of the entry tokens (CLR) generate a clear acknowledge token (CAK), as shown in Fig. 8b. CAK 232 and 233 have the same parameters as the corresponding clear tokens CLR 230 and 231.

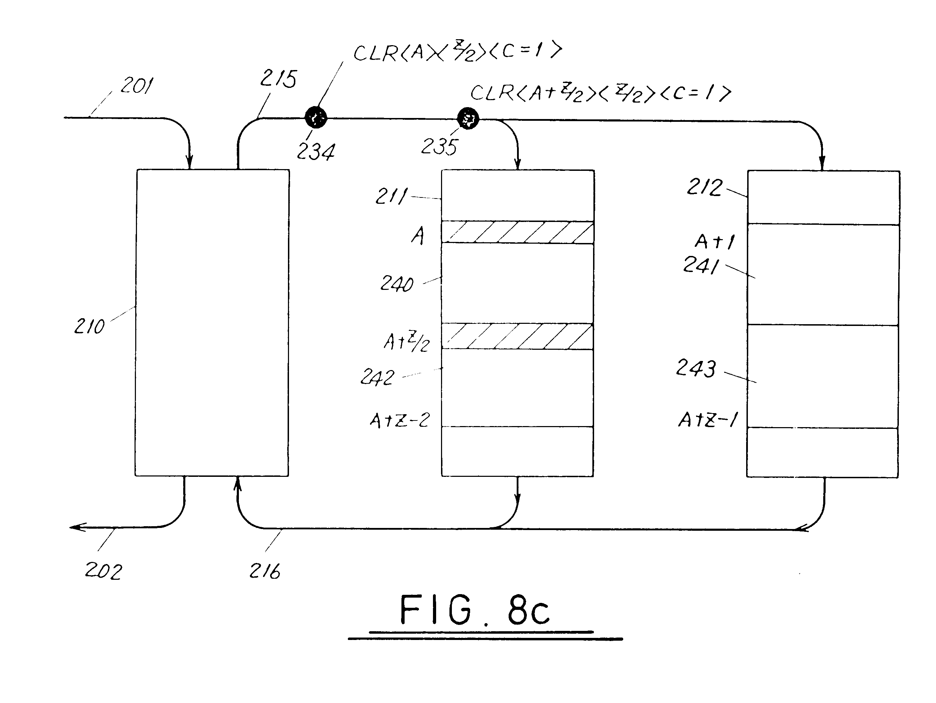

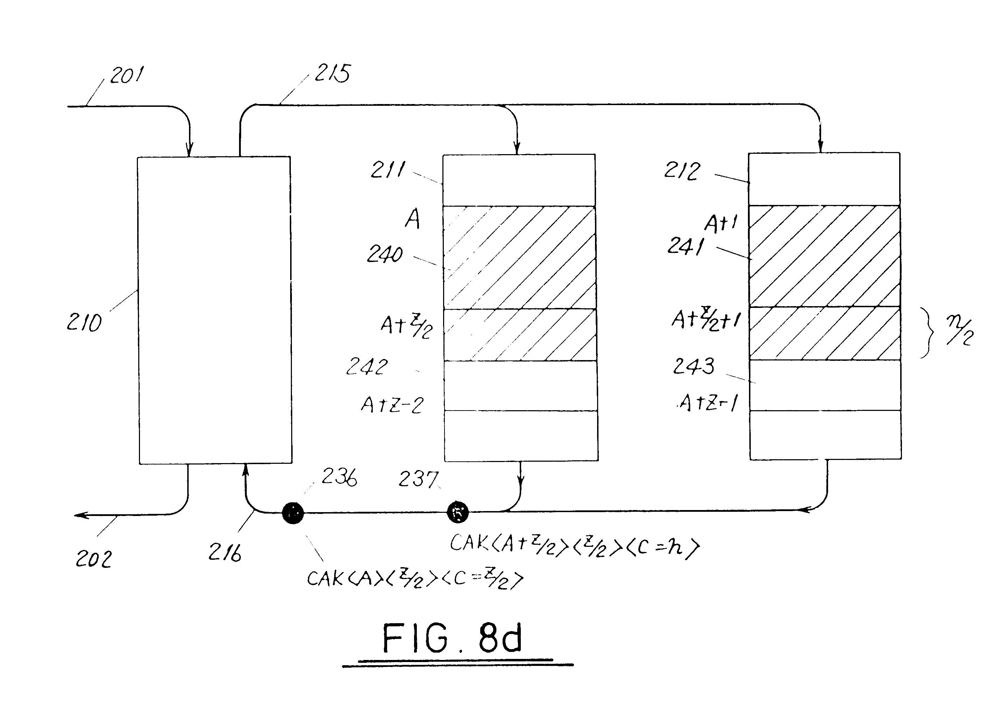

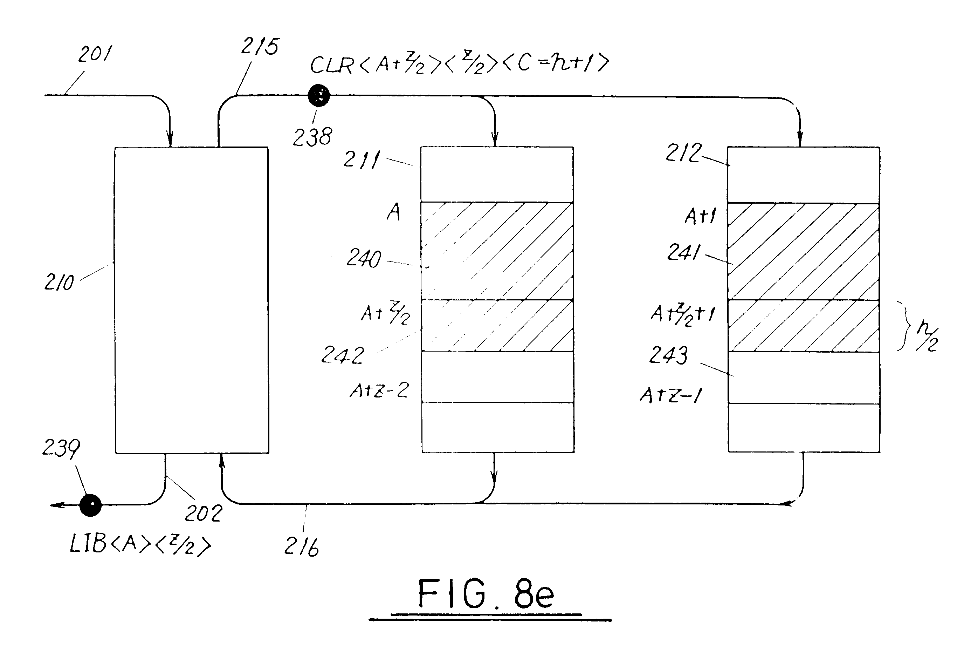

When the clear control section 210 receives tokens CAK 232 or CAK 233, it reviews the two parameters, that is the size of the space and the number of cleared addresses. Then it proceeds as explained below depending on the result of this review.
(a) In the case where C is less than Z/2 then referring to Fig. 8c the clear control section creates new clear indication tokens (CLR) 234 and 235. At this time the clear word number is only one greater than that of the preceding acknowledge token. In the examples of Fig. 8b and 8c, CLR 234 is created from CAK 232, and CLR 235 is created from CAK 233.
(b) In the case where C = Z/2 then the clear control section 210 generates a space liberate token (LIB) which has the same start address and space size as the preceding CAK token. In the examples of Figs. 8d and 8e, token LIB 239 is created from acknowledge token CAK 236.

When the example described above is applied, it is possible to proceed with the clearing process as though the memory section is interleaved into a single unit just by creating several liberate tokens even though the memory section has been interleaved and divided into more than one unit 211 and 212. Each time CLR and CAK tokens are sent between the clear control section and the memory units, one word is cleared. Since the sending of each token does not happen at the same time, referring to Fig. 8d, even though the situation occurs that when the first half of the space 240, 241 has been cleared the clearing of the second half of the space 242, 243 has not yet finished, referring to Fig. 8d and 8e it is acceptable to change CAK 236 into LIB 239 and CAK 237 into CLR 238. Therefore it is not necessary to prepare a token stack 750 as in the prior art example of Figs. 5a to 5e. This is the result of dividing the space to be cleared into a series of subspaces each defined by a series of consecutive addresses.

In the prior art example, if for example when the clearing of the odd number address group is finished the clearing of the even number address group is not, it is not possible to create a space liberate token. This is attributable to the fact that from the beginning two clear tokens are created to cause the clearing.

On the one hand referring to the actual example, when the clearing of spaces 242 and 243 is completed and the corresponding space liberate token LIB is created and sent to the distribution section (100a in Fig. 2) if the LIB token 239 has not yet been reused, it is possible to make a free space of the original size by joining this to it.

In the above explanation the example is given where the memory section has been divided into two units. However, the present invention can be applied just as it is even if the memory section is divided by interleaving it four ways into four units or by interleaving it eight ways into eight units for example.

In the above explanation it will be appreciated that it will be acceptable for the first parameter of the CLR token to be the start address of each of the subdivided spaces, and for the last parameter to be the size which represents the same spaces.

The advantages of the present invention may be summarised as follows:
(l) Since the space to be cleared is divided in series by address, it is possible to create a space release token for each subspace which has been cleared, and there is no need to have means to store tokens in the clear control section.
(2) Accordingly it is not necessary to investigate whether or not any associated token has already been stored in the clear control section when the clearing of a subspace is completed and the process within the clear control section is thus simpler and faster.
(3) It is possible for the number of subspaces into which a space is divided to be independent of the method of interleaving. It is possible to divide the space into an odd number of subspaces. Accordingly it is possible to decide on the number of divisions which best suits the circumstances, and flexible control is possible.
(4) It is not necessary for each of the subspaces into which the space is divided to be the same size, and thus the size of each of the subspaces can be selected at discretion.

Finally, it is possible to have a flexible clear control system which can be made to suit the particular conditions of a memory unit.

## Claims

1. A memory space clearing control method for clearing a memory space in a memory device wherein the space to be cleared is divided into a series of subspaces each defined by a consecutive series of addresses, clear space tokens in respect of each subspace are sent to the memory device in parallel from a clear control device to clear individual addresses in the respective subspaces one at a time in address order and, when all the addresses in a subspace are cleared, a liberate space token is generated to indicate that the cleared subspace is free for use even if another subspace has not yet been cleared.

2. A memory space clearing control method according to claim 1, in which each time an individual subspace address is cleared an acknowledge token is sent to the clear control device, the acknowledge token causing the clear control device to either send another clear space token to the memory device related to the next address in series after the first cleared address, or when the first cleared address is the last address in the subspace, to send the said liberate space token.

3. A method according to claim 2, wherein each clear space token and each acknowledge token comprises a parameter indicating the start address of the respective subspace, a parameter indicating the number of addresses in the respective subspace, and a parameter indicating the number of addresses of the respective subspace which have been previously cleared, the memory device clearing the address corresponding to the start address plus the previously cleared number of a received clear space token, and the clear control device generating the liberate space token when the previously cleared number and the number of subspace addresses indicated in a received acknowledge token are equal.

4. A memory space clearing control device comprising means for dividing a memory space to be cleared into a series of subspaces each defined by a consecutive series of addresses, means for generating clear space tokens in respect of each subspace in parallel so as to clear individual addresses in the respective subspaces one at a time in address order, means for detecting clearance of all the addresses in a subspace, and means responsive to the detecting means for generating a liberate space token to indicate that the cleared subspace is free for use even if another subspace has not yet been cleared.

## Patentansprüche

1. Verfahren zur Steuerung der Löschung eines Speicherbereichs, um einen Speicherbereich in einer Speichervorrichtung zu löschen, worin der zu löschende Bereich in eine Reihe von Unterbereichen aufgeteilt ist, von denen jeder durch eine aufeinanderfolgende Reihe von Adressen festgelegt ist, Bereichlösch-Token bezüglich jedes Unterbereichs parallel von einer Löschsteuervorrichtung zum Löschen individueller Adressen in den jeweiligen Unterbereichen eine um die andere in Reihenfolge der Adressen zur Speichervorrichtung geschickt werden und nach erfolgter Löschung sämtlicher Adressen in einem Unterbereich ein Freieplatz-Token erzeugt wird, um anzuzeigen, daß der gelöschte Unterbereich zur Nutzung frei ist, selbst wenn ein anderer Unterbereich noch nicht gelöscht worden ist.

2. Verfahren zur Steuerung der Löschung eines Speicherbereichs nach Anspruch 1, in welchem mit jedem Löschen einer individuellen Unterbereichsadresse ein Bestätigung-Token zur Löschsteuervorrichtung geschickt wird, wobei das Bestätigung-Token bewirkt, daß die Löschsteuervorrichtung entweder ein anderes Bereichlösch-Token zur mit der nächstfolgenden Adresse hinter der ersten gelöschten Adresse zusammenhängenden Speichervorrichtung schickt, oder daß sie, wenn die erste gelöschte Adresse die letzte Adresse im Unterbereich ist, das besagte Freieplatz-Token schickt.

3. Verfahren nach Anspruch 2, worin jedes Bereichlösch-Token und jedes Bestätigung-Token folgendes umfaßt: Einen Parameter zur Anzeige der Anfangsadresse des jeweiligen Unterbereichs, einen Parameter zur Anzeige der Anzahl der Adressen im jeweiligen Unterbereich und einen Parameter zur Anzeige der Anzahl der früher gelöschten Adressen des jeweiligen Unterbereichs, die Speichervorrichtung, die das Löschen der der Anfangsadresse plus der früher gelöschten Anzahl eines empfangenen Bereichlösch-Tokens entsprechenden Adresse vornimmt, und die Löschsteuervorrichtung, die das Freieplatz-Token erzeugt, wenn die früher gelöschte Anzahl und die Anzahl der in einem empfangenen Bestätigung-Token angezeigten Unterbereichsadressen gleich sind.

4. Vorrichtung zur Steuerung der Löschung eines Speicherbereichs, umfassend Mittel zur Aufteilung eines zu löschenden Speicherbereichs in eine Reihe von Unterbereichen, von denen jeder durch eine aufeinanderfolgende Reihe von Adressen festgelegt ist, Mittel zur parallelen Erzeugung von Bereichlösch-Token bezüglich jedes Unterbereichs, um so individuelle Adressen in den jeweiligen Unterbereichen eine um die andere in Reihenfolge der Adressen zu löschen, Mittel zur Ermittlung einer Freigabe sämtlicher Adressen in einem Unterbereich und auf das Ermittlungsmittel ansprechende Mittel zur Erzeugung eines Freieplatz-Tokens, um anzuzeigen, daß der gelöschte Unterbereich zur Nutzung frei ist, selbst wenn ein anderer Unterbereich noch nicht gelöscht worden ist.

## Revendications

1. Méthode de commande d'effacement d'un espace mémoire pour effacer un espace mémoire dans un dispositif de mémoire dans laquelle l'espace à effacer est divisé en une série de sous-espaces chacun défini par une série consécutive d'adresses, des jetons d'effacement d'espace en ce qui concerne chaque sous-espace sont envoyés au dispositif de mémoire en parallèle à partir d'un dispositif de commande d'effacement pour effacer des adresses individuelles dans les sous-espaces respectifs une par une dans l'ordre des adresses et, lorsque toutes les adresses dans un sous-espace sont effacées, un jeton d'espace libéré est généré pour indiquer que le sous-espace effacé peut être utilisé même si un autre sous-espace n'a pas encore été effacé.

2. Méthode de commande d'effacement d'un espace mémoire selon la revendication 1, dans laquelle chaque fois qu'une adresse de sous-espace individuelle est effacée un jeton d'accusé de réception est envoyé au dispositif de commande d'effacement, le jeton d'accusé de réception provoquant l'envoi, par le dispositif de commande d'effacement, soit d'un autre jeton d'effacement d'espace au dispositif de mémoire relatif à l'addresse suivante en série après la première adresse effacée, soit, lorsque la première adresse effacée est la dernière adresse dans le sous-espace, l'envoi dudit jeton d'espace libéré.

3. Méthode selon la revendication 2, dans laquelle chaque jeton d'effacement d'espace et chaque jeton d'accusé de réception comprend un paramètre indiquant l'adresse de début du sous-espace respectif, un paramètre indiquant le nombre d'adresses dans le sous-espace respectif, et un paramètre indiquant le nombre d'adresses du sous-espace respectif qui ont été précédemment effacées, le dispositif de mémoire effaçant l'adresse correspondant à l'adresse de début plus le nombre précédemment effacé d'un jeton d'effacement d'espace reçu, et le dispositif de commande d'effacement générant le jeton d'espace libéré lorsque le nombre précédemment effacé et le nombre d'adresses de sous-espaces indiqué dans un jeton d'accuse de réception reçu sont égaux.

4. Dispositif de commande d'effacement d'un espace mémoire comprenant un moyen de division d'un espace mémoire à effacer dans une série de sous-espaces chacun défini par une série consécutive d'adresses, un moyen de génération de jetons d'effacement d'espace en ce qui concerne chaque sous-espace en parallèle de façon à effacer les adresses individuelles dans les sous-espaces respectifs une par une dans l'ordre des adresses, un moyen de détection de l'effacement de toutes les adresses dans un sous-espace, et un moyen de réponse au moyen de détection pour générer un jeton d'espace libéré pour indiquer que le sous-espace effacé peut être utilisé même si un autre sous-espace n'a pas encore été effacé.
